# DEMANDE DE BREVET EUROPEEN

(11) **EP 2 790 141 A1**
(43) Date de publication de la demande: **15.10.2014**
(21) Numéro de dépôt: 14164325.4
(22) Date de dépôt: 11.04.2014
(51) Int. Cl.: G06Q 10/08

(54) **Dispositif de gestion et d'identification pour pièces et éléments d'une installation de remontée mécanique et procédé de gestion**

(30) Priorité: 12.04.2013 FR 1353337
(71) Demandeur: Altim, 74370 Argonay (FR); Picdi, 17000 La Rochelle (FR)
(72) Inventeur: Delmas, Bruno, 74960 Cran Gevrier (FR); Delille, Benoit, 74940 Annecy le Vieux (FR); Ramet, Nicolas, 74320 Thones (FR); Le Deventec, Gael, 17000 La Rochelle (FR); Cailbault, Jean-François, 86000 Poitiers (FR)
(74) Mandataire: Croonenbroek, Thomas Jakob

(57) **Abrégé**

La présente invention concerne un dispositif de gestion et d'identification (1) pour pièces et éléments soumis à maintenance d'une installation de remontée mécanique (20), comportant au moins un marqueur de gestion et d'identification (3) destiné à être fixé sur des pièces ou éléments soumis à maintenance,
ledit marqueur de gestion et d'identification (3) comportant :
- au moins une mémoire de stockage (31) de données de maintenance, lesdites données de maintenance comportant un identifiant unique ainsi qu'un historique de maintenance et/ou d'utilisation de la pièce ou élément sur lequel le marqueur de gestion et d'identification (3) est fixé,
- au moins une unité de transmission et réception de données par ondes électromagnétiques (33),
ledit dispositif comportant au moins un dispositif de lecture et d'écriture (5) des données de maintenance de la mémoire de stockage (31) via l'unité de transmission et réception de données par ondes électromagnétiques (33) ainsi qu'un dispositif de traitement centralisé (9) desdites données de maintenance.

## Description

La présente invention concerne le domaine des remontées mécaniques et plus particulièrement l'identification et la gestion des historiques de maintenance de pièces et éléments d'une installation de remontée mécanique.

De façon générale, les pièces ou éléments d'une installation de remontée mécanique doivent avoir un historique de maintenance très suivi et rigoureux du fait de normes et obligations de sécurité. Ainsi, il est nécessaire et important de pouvoir identifier et suivre les différentes pièces ou éléments afin de les lier à un historique de maintenance.

Cependant, ces historiques de maintenance sont généralement conservés de façon centralisée sur support papier ou sur support informatique. Ces historiques de maintenance peuvent également contenir d'autres informations liées à la pièce ou l'élément, comme par exemple des informations d'utilisation au sein de l'installation de remontée mécanique.

Ces historiques de maintenance et d'utilisation sont réalisés sur des supports externes aux installations de remontée mécanique et afin de les consulter il est nécessaire de relever l'identification de la pièce ou de l'élément et ensuite de chercher le carnet d'entretien correspondant à cette identification. Le stockage de ces historiques de maintenance et d'utilisation étant généralement éloigné du lieu où sont réalisé les maintenances ou les contrôles, cela peut prendre un certain temps pour les consulter.

De plus ces historiques de maintenance et d'utilisation déportés et centralisés sont généralement inutilisables ou difficilement transposables lors de la réutilisation d'éléments ou de pièces lors du démontage d'une installation de remontée mécanique.

Ainsi, l'invention à comme but de remédier au moins partiellement aux inconvénients de l'art antérieur et de proposer un dispositif de gestion et d'identification amélioré.

La présente invention concerne donc un dispositif de gestion et d'identification pour pièces et éléments soumis à maintenance d'une installation de remontée mécanique, comportant au moins un marqueur de gestion et d'identification destiné à être fixé sur des pièces ou éléments soumis à maintenance,
ledit marqueur de gestion et d'identification comportant :
- au moins une mémoire de stockage de données de maintenance, lesdites données de maintenance comportant un identifiant unique ainsi qu'un historique de maintenance et/ou d'utilisation de la pièce ou élément sur lequel le marqueur de gestion et d'identification est fixé,
- au moins une unité de transmission et réception de données par ondes électromagnétiques,
et ledit dispositif comportant au moins un dispositif de lecture et d'écriture des données de maintenance de la mémoire de stockage via l'unité de transmission et réception de données par ondes électromagnétiques ainsi qu'un dispositif de traitement centralisé desdites données de maintenance.

Selon un aspect de l'invention, le marqueur de gestion et d'identification comporte également au moins une unité électronique de modification autonome de données de maintenance.

Selon un autre aspect de l'invention, la au moins une mémoire de stockage, la au moins une unité de transmission et de réception de données par ondes électromagnétiques et la au moins une unité électronique de modification autonome sont toutes connectées deux à deux autres.

Selon un autre aspect de l'invention, le marqueur de gestion et d'identification comporte au moins un capteur interne relié à au moins une unité électronique de modification autonome.

Selon un autre aspect de l'invention, au moins un dispositif de lecture et d'écriture des données de maintenance de la mémoire de stockage est intégré à l'installation de remontée mécanique.

Selon un autre aspect de l'invention, le dispositif de gestion et d'identification comporte au moins un capteur, relié à au moins un dispositif de lecture et d'écriture afin de transmettre des données au marqueur de gestion et d'identification via la au moins une unité de transmission et réception de données par ondes électromagnétiques.

Selon un autre aspect de l'invention, le capteur est un capteur de comptage de passages.

Selon un autre aspect de l'invention, la fixation du marqueur de gestion et d'identification sur la pièce ou élément soumis à maintenance qui lui est destiné comporte un dispositif de garantie d'inviolabilité.

Selon un autre aspect de l'invention, le dispositif de traitement centralisé comporte une base de données de sorte à archiver et sauvegarder les données contenues dans la mémoire de stockage des différents marqueurs de gestion et d'identification de l'installation de remontée mécanique.

La présente invention concerne également un procédé de gestion et d'identification pour pièces et éléments d'une installation de remontée mécanique comportant un dispositif de gestion et d'identification pour pièces et éléments soumis à maintenance, ledit dispositif comportant pour chaque pièce ou élément soumis à maintenance, un marqueur de gestion et d'identification destiné à être fixé sur ladite pièce ou ledit élément soumis à maintenance, ledit marqueur de gestion et d'identification comportant :
- au moins une mémoire de stockage de données de maintenance, lesdites données de maintenance comportant un identifiant unique ainsi qu'un historique de maintenance et/ou d'utilisation de la pièce ou élément sur lequel le marqueur de gestion et d'identification est fixé,
- au moins une unité de transmission et réception de données par ondes électromagnétiques,
et ledit dispositif comportant au moins un dispositif de lecture et d'écriture des données de maintenance de la mémoire de stockage via l'unité de transmission et réception de données par ondes électromagnétiques ainsi qu'un dispositif de traitement centralisé desdites données de maintenance.
ledit procédé comportant au moins une des étapes suivantes:
- une étape de lecture de données de maintenance dans la mémoire de stockage du marqueur de gestion et d'identification,
- une étape d'écriture de données de maintenance dans la mémoire de stockage du marqueur de gestion et d'identification.

Selon un aspect du procédé, ce dernier comporte au moins une étape de traitement et modification de données de maintenance entre une étape de lecture et une étape d'écriture de données de maintenance dans la mémoire de stockage du marqueur de gestion et d'identification.

Selon un autre aspect du procédé, l'étape de traitement et modification de données de maintenance est réalisée par le dispositif de traitement centralisé.

Selon un autre aspect du procédé, le marqueur de gestion et d'identification comporte également au moins une unité électronique de modification autonome, et en ce que l'étape de lecture, l'étape d'écriture de données de maintenance dans la mémoire de stockage du marqueur de gestion et d'identification ainsi que l'étape de traitement et modification de données de maintenance, sont réalisées par la au moins une unité électronique de modification autonome dudit marqueur de gestion et d'identification.

L'invention concerne également une installation de remontée mécanique comportant au moins un dispositif de gestion comme décrit précédemment.

D'autres caractéristiques et avantages de l'invention apparaîtront plus clairement à la lecture de la description suivante, donnée à titre d'exemple illustratif et non limitatif, parmi lesquelles :
- la figure 1 montre une représentation schématique d'une installation de remontée mécanique câblée,
- la figure 2 une montre une représentation schématique du dispositif de gestion et d'identification,
- la figure 3 montre un organigramme du procédé de gestion utilisant le dispositif de gestion et d'identification selon l'invention.

Les éléments identiques portent des références similaires sur les différentes figures.

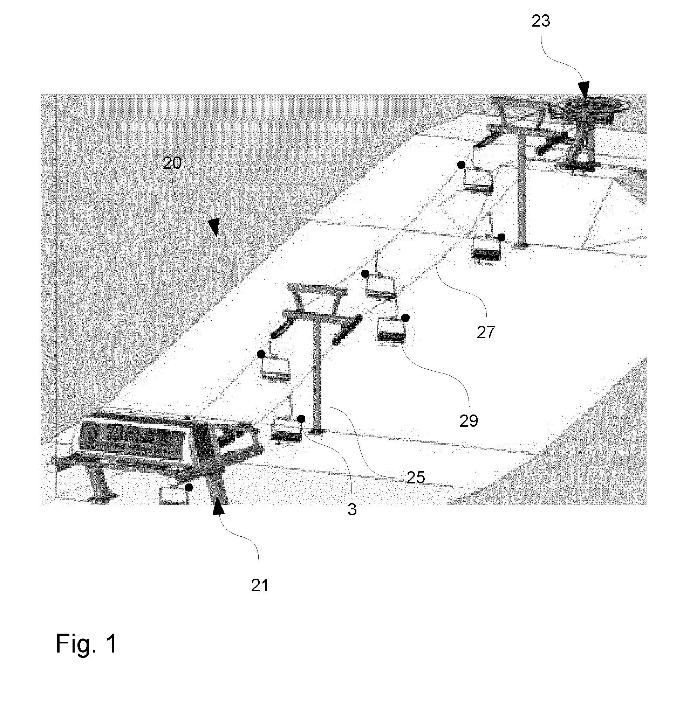

Comme l'illustre la figure 1 montrant une représentation schématique d'une installation de remontée mécanique 20 câblée, en l'occurrence un télésiège, celle-ci se compose généralement d'une gare de départ 21, d'une gare d'arrivée 23 et de pylônes 25 disposés entre la gare de départ 21 et la gare d'arrivée 23, permettant le guidage et le maintien du câble 27 de véhicules de transport 29 pour le transport de passagers. Ces véhicules de transport 29 sont ici dans l'exemple d'un télésiège, des sièges, mais ils diffèrent selon les types d'installation de remontée mécanique 20, par exemple dans le cas d'une télécabine il s'agit de cabines, pour un téléski, il s'agit de perches.

L'installation de remontée mécanique 20 comporte notamment un dispositif de gestion et d'identification 1 pour l'identification et la gestion de l'historique de maintenance de différentes pièces ou différents éléments soumis à maintenance.

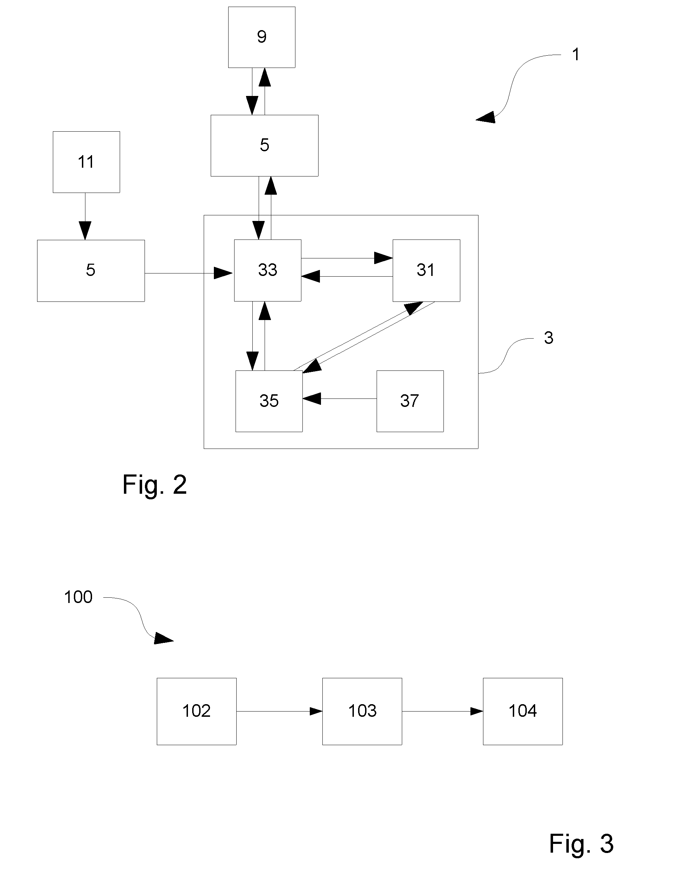

La figure 2 montre une représentation schématique d'un dispositif de gestion et d'identification 1. Le dispositif de gestion et d'identification 1 comporte notamment au moins un marqueur de gestion et d'identification 3 fixé sur des pièces ou éléments dont l'identification et la gestion de l'historique de maintenance sont importantes. Par exemple, un marqueur de gestion et d'identification 3 peut être fixé sur chaque véhicule de transport 29 de l'installation de remontée mécanique 20 (comme montré sur la figure 1) ou sur d'autres pièces comme par exemple les balanciers des pylônes 2 5.

Le marqueur de gestion et d'identification 3 comporte au moins une mémoire de stockage 31 électronique de données de maintenance, ladite mémoire comportant un identifiant unique ainsi qu'un historique de maintenance et d'utilisation de la pièce ou élément sur lequel le marqueur de gestion et d'identification 3 est installé. Il comporte également au moins une unité de transmission et réception de données par ondes électromagnétiques 33. Par ondes électromagnétique, on entend tout type de d'échange de données utilisant comme vecteur de communication des ondes électromagnétiques, cela peut ainsi être par exemple une communication par radiofréquence, des ondes lumineuses comme la lumière dans le spectre du visible, des infrarouges, ultraviolets ou tout autre mode de communication utilisant des ondes électromagnétiques connus par l'homme du métier.

Le dispositif de gestion et d'identification 1 comporte en outre au moins un dispositif de lecture et d'écriture 5 des données de maintenance contenues dans le marqueur de gestion et d'identification 3 au niveau de la mémoire de stockage 31. La lecture et l'écriture des données sont réalisées via l'unité de transmission et réception de données par ondes électromagnétiques 33.

Le au moins un dispositif de lecture et d'écriture 5 peut être intégré à l'installation de remontée mécanique 20. Par exemple au niveau de la gare de départ 21, la gare d'arrivée 23 ou encore d'autres localisations. Il est cependant tout à fait possible d'imaginer un dispositif de lecture et d'écriture 5 portatif pouvant être transporté et utilisé directement par un opérateur ou contrôleur.

Le dispositif de gestion et d'identification 1 comporte en outre au moins un dispositif de traitement centralisé 9, relié à au moins un dispositif de lecture et d'écriture 5, qui collecte et permet la gestion des données de maintenance par un opérateur, un contrôleur ou un système automatisé. Le dispositif de traitement centralisé 9 peut intégrer également une base de données de sorte à archiver et sauvegarder les données contenues dans la mémoire de stockage 31 des différents marqueurs de gestion et d'identification 3 de l'installation de remontée mécanique 20. Cela permet une redondance des données de maintenance et d'utilisation et ainsi permet une plus grande sécurité et une authentification desdites données ce qui est important afin de garantir l'inviolabilité desdites données en liaison avec l'identifiant unique de la pièce ou élément contenu dans le marqueur de gestion et d'identification 3. La base de données peut également être utilisée pour le partage et la communication des données vers d'autres systèmes ou intervenants.

De plus, le dispositif de gestion et d'identification 1 peut comporter une base documentaire qui, en liaison avec l'identifiant unique contenu dans la mémoire de stockage 31 et identifiant la pièce ou l'élément sur lequel est fixé le marqueur de gestion et d'identification 3, peut renvoyer sur des ressources documentaires comme des notices d'utilisation, plans.

Le fait d'avoir tout l'historique de maintenance et d'utilisation de la pièce ou élément directement au sein du marqueur de gestion et d'identification 3, permet une consultation simple et rapide de ce dernier directement sur la pièce ou l'élément via le au moins un dispositif de lecture et d'écriture 5. Cela peut notamment être intéressant dans le cas de réutilisation et transferts de pièces ou éléments d'une installation de remontée mécanique 20 à une autre. Par exemple un siège 29 d'un télésiège peut être réutilisé sur un autre télésiège de même type tout en conservant un historique de maintenance précis et exact. Ceci permet également d'éviter par exemple des révisions complètes de pièces ou éléments lors d'un échange ou réutilisation entre une installation de remontée mécanique et une autre.

Afin de garantir l'authenticité des données de maintenance contenues dans la mémoire de stockage 31 et que ces dernières concernent bien la pièce ou l'élément sur lequel est fixé le marqueur de gestion et d'identification 3, ladite fixation comporte un dispositif de garantie d'inviolabilité. Par exemple, ce dispositif de garantie d'inviolabilité peut être des vis ou boulons comportant des plombs de scellement qui se brisent en cas de démontage du marqueur de gestion et d'identification 3. Le marqueur de gestion et d'identification 3 peut également être soudé à la pièce ou l'élément sur lequel il est fixé. Le dispositif de garantie d'inviolabilité peut également être un marquage du marqueur de gestion et d'identification 3 avec un identifiant spécifique à chaque marqueur de gestion et d'identification 3.

Le marqueur de gestion et d'identification 3 peut également comporter au moins une unité électronique de modification autonome 35 qui permet de traiter directement les données de maintenance de la mémoire de stockage 31 directement au sein du marqueur de gestion et d'identification 3. Pour faciliter les échanges et la communication entre les au moins une mémoire de stockage 31, au moins une unité de transmission et réception 33 et au moins une unité électronique de modification autonome 35, ces dernières sont connectées deux à deux. On entend par cela que chacune d'elle est reliée directement aux deux autres éléments.

Le marqueur de gestion et d'identification 3 peut en outre comporter au moins un capteur interne 37 pouvant envoyer des données par connexion physique à la au moins une unité électronique de modification autonome 35 afin qu'elle puisse interpréter et traiter lesdites données et les intégrer dans les données de maintenance contenues dans la mémoire de stockage. Ce capteur interne 37 peut par exemple être un capteur de contraintes mécaniques subies par la pièce ou l'élément sur lequel est fixé le marqueur de gestion et d'identification 3.

Ainsi, l'installation de remontée mécanique 20 peut par exemple comporter au moins un capteur 11 relié à au moins un dispositif de lecture et d'écriture 5 et pouvant transmettre un signal ou des données au marqueur de gestion et d'identification 3 via la au moins une unité de transmission et réception 33. Le signal peut ensuite être traité par la au moins une unité électronique de modification autonome 35 afin que des données soient intégrées et/ ou modifiées dans la mémoire de stockage 31.

Par exemple, le capteur 11 peut être un capteur de conditions environnementales qui collecte des données qui peuvent être envoyées au marqueur de gestion et d'identification 3 pour être traitées par l'unité électronique de modification autonome 35 et inscrites dans la mémoire de stockage 31.

Le capteur peut également être par exemple un capteur de comptage de passage placé dans la gare de départ 21, la gare d'arrivée 23 ou encore sur un pylône 25. A chaque passage de la pièce ou élément sur lequel est fixé un marqueur de gestion et d'identification 3, par exemple un véhicule de transport 29, le capteur envoie un signal au marqueur de gestion et d'identification 3 et ce signal est traité par la au moins une unité électronique de modification autonome 35 qui ajoute un passage dans l'historique contenue dans la mémoire de stockage 31.

Il est ainsi possible grâce au dispositif de gestion et d'identification 1, de définir un procédé de gestion et d'identification 100 pour pièce ou élément d'une remontée mécanique comme illustré sur la figure 3.

Le procédé de gestion et d'identification 100 comporte au moins une des étapes suivantes:
- une étape de lecture 102 de donnée de maintenance dans la mémoire de stockage 31 du marqueur de gestion et d'identification 3,
- une étape d'écriture 104 de donnée de maintenance dans la mémoire de stockage 31 du marqueur de gestion et d'identification 3.

Ces étapes peuvent être réalisées, par le dispositif de lecture et d'écriture 5 de donnée de maintenance. Il peut simplement s'agir d'une simple consultation des données de maintenance contenues dans la mémoire de stockage 31 ou encore d'une mise à jour de ces dernières.

Le procédé de gestion et d'identification 100 peut également comporter une étape de traitement et de modification 103 de données de maintenance entre l'étape de lecture 102 et l'étape d'écriture 104. Cette étape de traitement et de modification 103 peut être réalisée par le dispositif de traitement centralisé 9. Par exemple lors d'une maintenance, un opérateur effectue une mise à jour de l'historique de la pièce ou de l'élément portant le marqueur de gestion et d'identification 3. Pour cela il réalise une première étape de lecture des données de maintenance de la mémoire de stockage 31 au moyen du dispositif de lecture et d'écriture 5, traite et modifie les données de maintenance au moyen du dispositif de traitement centralisé 9 en fonction de la maintenance réalisée et intègre les modifications des données de maintenance dans la mémoire de stockage 31 de nouveau au moyen du dispositif de lecture et d'écriture 5.

Dans le cas où le marqueur de gestion et d'identification 3 comporte également au moins une unité électronique de modification autonome 35, l'étape de lecture 102, l'étape d'écriture 104 et l'étape de traitement et de modification 103 peuvent être réalisées par cette dernière. Par exemple la réception de données d'un capteur 11 notamment de comptage par le marqueur de gestion et d'identification 3 entraine la lecture des données de maintenance de la mémoire de stockage 31, l'ajout d'un passage à ces données de maintenance et l'intégration de cette modification dans la mémoire de stockage 31 par le au moins une unité électronique de modification autonome 35.

Ainsi, on voit bien qu'un dispositif de gestion et d'identification 1 selon l'invention, permet, du fait de la centralisation des données de maintenance au sein du marqueur de gestion et d'identification 3, d'éviter des investissements dans une infrastructure de stockage et de centralisation des données de maintenance et simplifie la gestion des historiques de maintenance des différentes pièces ou éléments qui peuvent plus facilement être utilisés sur différentes installations de remontées mécanique 20 au cours de leur vie.

## Revendications

1. Dispositif de gestion et d'identification (1) pour pièces et éléments soumis à maintenance d'une installation de remontée mécanique (20), comportant au moins un marqueur de gestion et d'identification (3) destiné à être fixé sur des pièces ou éléments soumis à maintenance, **caractérisé en ce que** ledit marqueur de gestion et d'identification (3) comporte :
- au moins une mémoire de stockage (31) de données de maintenance, lesdites données de maintenance comportant un identifiant unique ainsi qu'un historique de maintenance et/ou d'utilisation de la pièce ou élément sur lequel le marqueur de gestion et d'identification (3) est fixé,
- au moins une unité de transmission et réception de données par ondes électromagnétiques (33),
et **en ce que** ledit dispositif comporte au moins un dispositif de lecture et d'écriture (5) des données de maintenance de la mémoire de stockage (31) via l'unité de transmission et réception de données par ondes électromagnétiques (33) ainsi qu'un dispositif de traitement centralisé (9) desdites données de maintenance.

2. Dispositif de gestion (1) selon la revendication précédente, **caractérisé en ce que** le marqueur de gestion et d'identification (3) comporte également au moins une unité électronique de modification autonome (3 5) de données de maintenance.

3. Dispositif de gestion (1) selon la revendication précédente, **caractérisé en ce que** la au moins une mémoire de stockage (31), la au moins une unité de transmission et de réception de données par ondes électromagnétiques (33) et la au moins une unité électronique de modification autonome (35) sont toutes connectées deux à deux.

4. Dispositif de gestion (1) selon l'une des revendications 2 ou 3, **caractérisé en ce que** le marqueur de gestion et d'identification (3) comporte au moins un capteur interne (37) relié à au moins une unité électronique de modification autonome (35).

5. Dispositif de gestion (1) selon l'une des revendications précédentes, **caractérisé en ce qu'**au moins un dispositif de lecture et d'écriture (5) des données de maintenance de la mémoire de stockage (31), est intégré à l'installation de remontée mécanique (20).

6. Dispositif de gestion (1) selon l'une des revendications 2 à 5, **caractérisé en ce qu'**il comporte au moins un capteur (11) destiné à être placé au sein de (20) l'installation de remonté mécanique et relié à au moins un dispositif de lecture et d'écriture (5) afin de transmettre des données au marqueur de gestion et d'identification (3) via la au moins une unité de transmission et réception de données par ondes électromagnétiques.

7. Dispositif de gestion (1) selon la revendication 6, **caractérisé en ce que** le capteur est un capteur de comptage de passages.

8. Dispositif de gestion (1) selon l'une des revendications précédentes, **caractérisé en ce que** la fixation du marqueur de gestion et d'identification (3) sur la pièce ou élément soumis à maintenance qui lui est destiné comporte un dispositif de garantie d'inviolabilité.

9. Dispositif de gestion (1) selon l'une des revendications précédentes, **caractérisé en ce que** le dispositif de traitement centralisé (9) comporte une base de donnée de sorte à archiver et sauvegarder les données contenues dans la mémoire de stockage (31) des différents marqueurs de gestion et d'identification (3) de l'installation de remontée mécanique (20).

10. Procédé de gestion et d'identification (100) pour pièces et éléments d'une installation de remonté mécanique (20) comportant un dispositif de gestion et d'identification (1) pour pièces et éléments soumis à maintenance, ledit dispositif comportant pour chaque pièce ou élément soumis à maintenance, un marqueur de gestion et d'identification (3) destiné à être fixé sur ladite pièce ou ledit élément soumis à maintenance,
ledit marqueur de gestion et d'identification (3) comportant :
- au moins une mémoire de stockage (31) de données de maintenance, lesdites données de maintenance comportant un identifiant unique ainsi qu'un historique de maintenance et/ou d'utilisation de la pièce ou élément sur lequel le marqueur de gestion et d'identification (3) est fixé,
- au moins une unité de transmission et réception de données par ondes électromagnétiques (33),
et ledit dispositif comportant au moins un dispositif de lecture et d'écriture (5) des données de maintenance de la mémoire de stockage (31) via l'unité de transmission et réception de données par ondes électromagnétiques (33) ainsi qu'un dispositif de traitement centralisé (9) desdites données de maintenance.
**caractérisé en ce que** ledit procédé comporte au moins une des étapes suivantes:
- une étape de lecture (102) de données de maintenance dans la mémoire de stockage (31) du marqueur de gestion et d'identification (3),
- une étape d'écriture (104) de données de maintenance dans la mémoire de stockage (31) du marqueur de gestion et d'identification (3).

11. Procédé selon la revendication 10, **caractérisé en ce que** ledit procédé comporte au moins une étape de traitement ou modification de données de maintenance (103) entre une étape de lecture (102) et une étape d'écriture (104) de données de maintenance dans la mémoire de stockage (31) du marqueur de gestion et d'identification (3).

12. Procédé selon la revendication 11, **caractérisé en ce que** l'étape de traitement et modification de données de maintenance (103) est réalisée par le dispositif de traitement centralisé (9).

13. Procédé selon la revendication 11, **caractérisé en ce que** le marqueur de gestion et d'identification (3) comporte également au moins une unité électronique de modification autonome (3 5), et **en ce que** l'étape de lecture (102), l'étape d'écriture (104) de données de maintenance dans la mémoire de stockage (31) du marqueur de gestion et d'identification (3) ainsi que l'étape de traitement et modification de données de maintenance (103), sont réalisées par la au moins une unité électronique de modification autonome (35) dudit marqueur de gestion et d'identification (3).

14. Installation de remontée mécanique comportant au moins un dispositif de gestion (1) selon l'une des revendications 1 à 9.
